# EUROPEAN PATENT SPECIFICATION

(11) **EP 1 093 401 B1**
(45) Date of publication and mention of the grant of the patent: **14.08.2002**
(21) Application number: 99931716.7
(22) Date of filing: 16.06.1999
(51) Int. Cl.: B05D 1/34, C09J 5/04

(54) **METHOD OF SEPARATE APPLICATION OF RESIN AND HARDENER**
VERFAHREN ZUM GETRENNTEN AUFTRAGEN EINES HARZES UND EINES HÄRTERS
PROCEDE D'APPLICATION SEPAREE D'UNE RESINE ET D'UN DURCISSEUR

(30) Priority: 22.06.1998 SE 9802223; 22.06.1998 SE 9802222; 22.06.1998 SE 9802224; 01.07.1998 US 91440 P; 01.07.1998 US 91438 P; 01.07.1998 US 91442 P; 16.10.1998 SE 9803549; 16.10.1998 SE 9803550; 16.10.1998 SE 9803551
(43) Date of publication of application: 25.04.2001
(73) Proprietor: AKZO NOBEL N.V., 6800 SB Arnhem (NL); Casco Products AB, 100 61 Stockholm (SE)
(72) Inventor: NASLI-BAKIR, Benyahia, S-132 40 Saltsjö-Boo (SE); LINDBERG, Stefan, S-186 42 Vallentuna (SE); JANACKOVIC, Anna, S-138 33 Älta (SE)
(74) Representative: Jönsson, Christer
(86) International application number: PCT/SE99/01084
(87) International publication number: WO 99/67028

(56) References cited:
- EP-A- 0 131 883
- EP-A- 0 207 024
- DE-A- 19 603 988
- DATABASE WPI Section Ch, Week 198008 Derwent Publications Ltd., London, GB; Class A21, AN 1980-14466C XP002118864 & SE 7 800 311 A (CASCO AB), 17 September 1979 (1979-09-17)

## Description

According to the present invention there is provided a method of separate application of a gluing system, comprising an amino resin and hardener components, onto a substrate. The present invention also provides a hardener composition comprising a volatile acid, which can be used in the method and a device for carrying out the method.

The resin component, preferably in the form of strands, is preferably applied first, whereupon the hardener component is applied. The method can, for example, be employed in the production of gluelam or laminated timber.

Separate application of the components of a gluing system onto a substrate, such as, for example, a piece of wood, is known in the art, and places certain restrictions on the characteristics of the components used. By keeping the different components, often only resin and hardener components, separated in the application device, many advantages are offered, as is known in the art. From the viewpoint of, interalia, pot life, operation, and cleaning, separate application of the components of a gluing system is preferred over the application of a mixture of said components.

In EP 0 362 742 separate application of, interalia, amino resin gluing systems to wooden parts is suggested, by means of curtain application of both the components, or of one component, and strand application of the other. However, there is no indication of a preferred order of application of said components. In the example given, only a phenol-resorcinol-formaldehyde resin gluing system was used.

WO 97/29161 is concerned with a two-component glue system for the production of laminated wood panels, and only in general terms mentions separate application of melamine glues. Neither a particular method nor a specific order of application of the components is suggested. The hardener component used contains 20-40 % by weight of an inorganic filler.

However, in practice, it has now been found that for separate application, when only a small amount of hardener is used, as is often the case, curtain application is difficult to realise with a good gluing result, since it is hard to secure the accomplishment of a continuous and uniform curtain formed of only a relatively small flow, possibly leading to an impaired gluing result and glue joints having reduced strength. Additionally, the curtain is easily affected by even small wind blows. Moreover, it has also been found that a high amount of filler in the hardener component, such as 20-40 % by weight, inhibits the achievement of an adequate blending of the applied components on the substrate.

Furthermore, technical solutions are still sought for the need to find simple application systems for separate application of the components of a gluing system, which can be adjusted to the gluing system in question and the desired assembly times. By assembly time it is meant the time that lapse from the moment of application of a gluing system onto a substrate to the moment of pressing the substrates to be glued together.

Accordingly, the present invention provides a method of application of an amino resin gluing system, a hardener composition suitable for use in the method and a device suitable for carrying out the method, by which the above-mentioned problems are overcome.

The method according to the invention is defined in the appended claims. It comprises separate application of resin and hardener components of an amino resin gluing system onto a substrate, wherein the hardener comprises a volatile acid, and a filler in an amount of less than 20% by weight and the components of the gluing system are applied in the form of strands or by means of spraying, or any combination thereof, in optional order of application.

The amino resin used in the method of the invention can be any amino resin, such as, for example, urea-formaldehyde, melamine-urea-formaldehyde, melamine-formaldehyde, melamine-urea-phenol-formaldehyde resin, and furfuryl alcohol modified varieties thereof, the preferred resin being melamine-urea-formaldehyde.

According to the method, an amino resin, and a suitable hardener is applied separately to wooden substrates. In the method, the resin component is preferably applied first in the form of strands, whereupon the hardener is applied in the form of strands, or alternatively, is applied by means of spraying. By use of the preferred order of application according to the invention, any damages to the substrate, such as wood, due to the hardener composition is minimised.

Depending on the reactivity of the components in the gluing system, the desired assembly times, special considerations about substrate damaging by the acid used in the hardener and emission of vapour of the acid into the surrounding atmosphere, such as, in the working environment, the later applied strands may overlap, do not overlap, or do not contact, respectively, the corresponding previously applied strands of the other components.

As used here, the term "strand" also comprehends the meaning of the term "ribbon", also conventionally used in the art, and any other like term.

A hardener composition is also provided according to the present invention as defined in the appended claims, for use in combination with amino resin gluing systems. The hardener composition can be used in the method of the present invention in order to make the gluing system faster curing, and to obtain joints endowed with higher strength.

As an essential constituent of the hardener component of amino resin gluing systems, an acid is included. When aggressive acids are used, remaining acid in the glued product might cause detrimental effects to the substrate or joint, reducing the strength of the substrate and/or the joint, and/or discoloration of the substrate by the acid, which is highly undesirable.

Thus, the hardener composition according to the present invention comprises a volatile acid, which can readily be evaporated so that no detrimental amounts of acid will remain in the resulting glue joint, and which also allows for relatively large amounts of acid (and thus hardener) to be used in order to obtain a fast-curing system, if desired.

The device according to the invention is defined in the appended claims and can be used for carrying out the method, wherein the components of the gluing system are applied in the form of strands into a substrate.

According to the method of the invention, the hardener component can also be applied first, followed by the resin component, while the preferred order of application being the hardener component first, followed by the resin component.

Besides the volatile acid, the present hardener can also comprise water, thickener, resorcinol, and, optionally, a relatively low amount of filler.

The hardener can either be free from filler, or alternatively contain a filler in an amount, for example, suitably of at least 1 % by weight and preferably of at least 5 %.

The hardener composition to be used in the method according to the invention comprises:
- up to 50% by weight of a volatile acid, suitably 5-30 %, preferably 10-30 % and most preferably 10-25 %, and
- suitably less than 20% by weight of a filler, preferably less than 15 % and most preferably less than 10 %.

The amount of filler used, if any, can be determined as suitable under the specific circumstances from time to time. However, as shown in Example 1, hereinafter, the strength of the resulting joint appears to be reduced with higher amounts of filler.

Suitable fillers include, for example, kaolin.

As used here, the term "volatile acid" is to be understood as meaning; having a low boiling point, and/or having a low vapour pressure at room temperature. Said acids should suitably have a vapour pressure of less than 10 mm Hg at a temperature of up to 60 °C.

Suitable acids are, for instance, organic and inorganic acids, whereby the organic acids are preferred. Preferred organic acids include, for example, formic acid, acetic add and pyrovic acid. Suitable inorganic acid include, for example, hydrochloric acid. Preferably formic acid may be used.

A high proportion of acid makes the gluing system faster-curing. By using volatile acid, which easily can be evaporated, a relatively larger amount of hardener in relation to resin can be used, such as a weight ratio of hardener to resin, for example, of about 1:6-1:1, suitably 1:4-1:1, preferably 1:3,5-1:2, leading to a higher-strength joint and a faster-curing system, as shown in Example 2, hereinafter.

Accordingly, in a preferred embodiment, the hardener composition comprises a relatively low filler content, a relatively high volatile acid content and a relatively high weight ratio of hardener to resin, as defined herein.

In the method of the present invention, the resin and hardener components can be applied in any order in the form of strands or by means of spraying, more suitably, the resin and hardener are applied in the form of strands, or, alternatively, the hardener component can be applied by means of spraying and the resin in the form of strands, wherein the hardener in either case preferably is applied following the application of the resin. Preferably they are both applied in the form of strands.

Depending on the reactivity of the components of the gluing system and the desired assembly time, the strands of the different components, such as the hardener and the resin, can be applied in relation to each other in various suitable ways. Thus, for low reactive/slow curing gluing systems, and/or short assembly times, it is suitable that the later applied strands of one component overlap the corresponding strands of the previously applied component(s), or they are applied adjacent to each other so that they are in essentially contact with each other. When high reactive/fast curing gluing systems are used, and/or long assembly times are desired, it is suitable that the later applied strands of one component are applied with a certain distance in relation to the corresponding strands of the previously applied component(s). For assembly times of about 60-120 min a distance of about 4-8 mm between the strands of the different components of the gluing system, such as the hardener and the resin, is suitable, for assembly times of about 15-60 min a distance of about 2-4 mm is preferred, and for assembly times of about up to 15 min overlapping of the strands or essentially contact between them is preferred.

However, when the avoidance of the contact of the hardener component with the substrate is of primary concern, such as, for instance, for protection of the substrate from the resin component, the resin component should desirably be applied so that the strands will form a continuous layer on the substrate, on top of which the hardener subsequently is applied in the form of strands, or by means of spray application.

In the case of application in the form of strands of both components, it is preferred that the hardener is applied on top of the resin strands, whereby any undesired contact of the hardener with the substrate can be prevented, and admixing of the components is enhanced.

Accordingly, in one embodiment of the method of the present invention, the hardener is applied on top of the resin strands. In this embodiment it is conceivable even to use hardeners, or hardeners having constituent(s), from which the substrate desirably should be protected, without damaging the substrate or impairing the strength of the resulting glue joint.

In this manner the substrate is protected from direct contact with the hardener, which is often highly desirable. The direct contact of the acid in the hardener, applied on top of the resin component on a first piece of substrate, with another piece to be glued together with the first one, is limited to a certain extent by the fact that some of the acid will have diffused, or migrated, into the resin component at the point of time when the pieces are brought together and pressed. This method allows for relatively large quantities of volatile acid to be employed.

The opposite order of application, i.e., the hardener first, is also possible, although not preferred. This order of application can, for example, be used where it is desirable to avoid or minimise any emission of vapour of the acid into the surrounding atmosphere, such as, in the working environment, especially if the acid used is not detrimental to the specific substrate. This order of application could also be advantageous, e.g., in the case where an expandable gluing system is used, in order to prevent the generated gas from escaping into the atmosphere.

Moreover, if it is desired or required, the hardener may be divided in one or more strands, which may have different compositions with reference to the amounts of volatile acid and filler, and be applied separately.

A suitable device which can be used in the method according to the present invention for the application in the form of strands of both the components, is a device comprising a unit of at least two hollow members, at least one member for each component, provided with a number of orifices in each member designed to apply the respective component onto a substrate, below said hollow members, to form strands, the hollow members being positioned above the plane of application, wherein each of the orifices of one hollow member are aligned in the machine direction-in relation to the corresponding orifices of the other hollow member(s). This device enables application of the components of a gluing system, such as a resin and a hardener, onto a substrate, wherein the later applied strands of one component are overlapping the previously applied strands of the other component(s).

Another suitable device which can be used in the method according to the present invention for the application in the form of strands of both the components, is a device comprising a unit of at least two hollow members, at least one member for each component, provided with a number of orifices in each member designed to apply the respective component onto a substrate below said hollow members to form strands, the hollow members being positioned above the plane of application, wherein each of the orifices of one hollow member are parallel displaced in the machine direction in relation to the corresponding orifices of the other hollow member(s). This device enables application of the components of a gluing system, such as a resin and a hardener, onto a substrate, wherein the later applied strands of one component are applied at a certain distance, depending on the gluing system used and the wanted assembly time, in relation to the previously applied strands of the other component(s).

By the use of such a device, when the resin component is applied first, the application of the strands of the resin component can also easily be adjusted, so that said strands, when applied to the substrate, coalesce to form an essentially continuous layer, on to which the hardener can be applied in the form of strands, or by means of spraying.

The application is conveniently carried out with amounts of the components to be applied to the substrate in the range of about 200-500 g/m².

A suitable feeding rate is up to about 300 m/min, more suitably 30-250 m/min, and, preferably 60-200 m/min. At feeding rates below 30 m/min difficulties in dosage are likely to be encountered due to discontinuous strands emanating from the orifices (also referred to as dripping).

### EXAMPLE 1

A beam was prepared from lamellae having the following dimensions:
length = 280 mm
thickness = 33 mm
width = 145 mm

To the hardener used in this Example, comprising 17 % by weight of formic acid, which had been added to water, kaolin in the amounts listed below was added as a filler, wherein the amount of 30 % is not an example according to the present invention, and, thereafter the hardener was thickened by means of polyvinyl alcohol to a viscosity of, at 25 °C, 2 000 mPas.

The resin and hardener components were applied separately in the form of strands, in the preferred order, in a total amount of 400 g/m². The ratio of hardener to resin used was 30:100, and the resin used was melamine-urea-formaldehyde.

The time and temperature used, and pressure applied, in the pressing was 20 °C, 20 h, and 8 bar, respectively.

After pressing, and one day for the joints to stabilise, the beam was delaminated according to EN-391-B 1 cycle. The following results were obtained:

| Joint | Content filler in hardener | % Delamination |
|---|---|---|
| 1 | 0 % | 0.0 |
| 2 | 5 % | 2.0 |
| 3 | 15 % | 6.1 |
| 4 (comparative) | 30 % | 24.0 |

### EXAMPLE 2

A beam was prepared from lamellae having the following dimensions:
length = 280 mm
thickness = 33 mm
width = 145 mm

The hardener used in this Example consisted of 17 % by weight of formic acid, which was added to water, and thickened by means of polyvinyl alcohol to a viscosity, at 25°C, of 2 000 mPas.

Application and pressing were performed in the same manner as in Example 1, using the same resin.

After pressing and one day for the stabilising of the joints, the beam was delaminated according to EN-391-B 1 cycle. The following results were obtained:

| Joint | Ratio resin/hardener | % Delamination |
|---|---|---|
| 1 | 100:15 | 11.5 |
| 2 | 100:20 | 12.0 |
| 3 | 100:30 | 0.0 |

The method of the present invention could also be used for the separate application of the resin and hardener components of an expandable amino resin gluing system wherein said hardener component is acidic, and the resin component comprises one or more gas generating substance capable of forming a gas when contacted with said hardener component, wherein the hardeners of the present invention also can be used. A suitable corresponding resin component could, for example, comprise such gas forming substance(s) in an amount in the interval of 0.1-10 % by weight, as calculated on the pure, active form of said substance(s).

## Claims

1. A method of separate application of resin and hardener components of an amino resin gluing system onto a substrate, **characterised in that** the hardener comprises a volatile acid and is either free from filler or comprises a filler in an amount of less than 20% by weight, wherein the components of the gluing system are applied in the form of strands or by means of spraying, or any combination thereof, in optional order of application.

2. A method according to claim 1, **characterised in that** the resin component is applied in the form of strands, whereafter the hardener component is applied by means of spraying.

3. A method according to claim 1, **characterised in that** the components of the gluing system are separately applied, in the form of strands, in optional order, onto the substrate.

4. A method according to claim 3, **characterised in that** the later applied strands of one component substantially overlap the corresponding previously applied strands of the other component(s).

5. A method according to claim 4, **characterised in that** the hardener component is applied in the form of strands on top of the resin component applied in the form of strands.

6. A method according to claim 3, **characterised in that** the later applied strands of one component do not overlap the corresponding previously applied strands of the other component(s).

7. A method according to claim 3, **characterised in that** the later applied strands of one component do not contact the corresponding previously applied strands of the other component(s).

8. A method according to any of claims 1-7, **characterised in that** the hardener comprises volatile acid in an amount of 10-30 % by weight.

9. A method according to any of claims 1-8, **characterised in that** the weight ratio of hardener to resin is 1:3.5-1:2.

10. A method according to any of claims 1-9, **characterised in that** the resin component is selected from the group of melamine-urea-formaldehyde, urea-formaldehyde, or melamine-formaldehyde resins.

11. A method according to any of claims 1-10, **characterised in that** the hardener comprises a filler in an amount of less than 20% by weight.

12. A method according to any of claims 1-11, **characterised in that** the hardener is either free from filler or comprises a filler in an amount of less than 10% by weight.

13. A method according to any of claims 1-12, **characterised in that** the hardener comprises a filler in an amount of less than 10% by weight.

14. Hardener composition for use in the method of any of the claims 1-13, **characterised in that** it comprises a volatile acid and is either free from filler or comprises a filler in an amount of less than 20 % by weight.

15. Hardener composition according to claim 14, **characterised in that** it comprises volatile acid in an amount of 10-30 % by weight.

16. Hardener composition according to any of claims 14-15, **characterised in that** the volatile acid is formic acid, acetic acid, or pyrovic acid.

17. Hardener composition according to any of claims 14-16, **characterised in that** it comprises a filler in an amount of less than 20% by weight.

18. Hardener composition according to any of claims 14-16, **characterised in that** it is either free from filler or comprises a filler in an amount of less than 10% by weight.

19. Hardener composition according to any of claims 14-18, **characterised in that** it comprises a filler in an amount of less than 10% by weight.

20. Hardener composition according to any of claims 14-19, **characterised in that** it comprises a thickener.

## Patentansprüche

1. Verfahren zum getrennten Auftragen von Harz- und Härterkomponenten eines Aminoharzleimsystems auf ein Substrat, **dadurch gekennzeichnet, daß** der Härter eine flüchtige Säure aufweist und entweder füllstofffrei ist oder einen Füllstoff in einem Anteil von weniger als 20 Gew.-% aufweist, wobei die Komponenten des Leimsystems in Form von Strängen oder durch Sprühen oder durch eine Kombination aus beiden in wahlfreier Auftragreihenfolge aufgetragen werden.

2. Verfahren nach Anspruch 1, **dadurch gekennzeichnet, daß** die Harzkomponente in Form von Strängen aufgetragen wird, wonach die Härterkomponente durch Sprühen aufgetragen wird.

3. Verfahren nach Anspruch 1, **dadurch gekennzeichnet, daß** die Komponenten des Leimsystems in Form von Strängen in wahlfreier Reihenfolge getrennt auf das Substrat aufgetragen werden.

4. Verfahren nach Anspruch 3, **dadurch gekennzeichnet, daß** die später aufgetragenen Stränge einer Komponente die entsprechenden vorher aufgetragenen Stränge der anderen Komponente(n) im wesentlichen überlappen.

5. Verfahren nach Anspruch 4, **dadurch gekennzeichnet, daß** die Härterkomponente in Form von Strängen auf die in Form von Strängen aufgetragene Harzkomponente aufgetragen wird.

6. Verfahren nach Anspruch 3, **dadurch gekennzeichnet, daß** später aufgetragenen Stränge einer Komponente die entsprechenden vorher aufgetragenen Stränge der anderen Komponente(n) nicht überlappen.

7. Verfahren nach Anspruch 3, **dadurch gekennzeichnet, daß** die später aufgetragenen Stränge einer Komponente die entsprechenden vorher aufgetragenen Stränge der anderen Komponente(n) nicht berühren.

8. Verfahren nach einem der Ansprüche 1 bis 7, **dadurch gekennzeichnet, daß** der Härter flüchtige Säure in einem Anteil von 10 bis 30 Gew.-% aufweist.

9. Verfahren nach einem der Ansprüche 1 bis 8, **dadurch gekennzeichnet, daß** das Gewichtsverhältnis des Härters zum Harz 1:3,5 bis 1:2 ist.

10. Verfahren nach einem der Ansprüche 1 bis 9, **dadurch gekennzeichnet, daß** die Harzkomponente aus der Gruppe von Melamin-Harnstoff-Formaldehyd-, Harnstoff-Formaldehyd- oder Melamin-Formaldehyd-Harzen ausgewählt ist.

11. Verfahren nach einem der Ansprüche 1 bis 10, **dadurch gekennzeichnet, daß** der Härter einen Füllstoff in einem Anteil von weniger als 20 Gew.-% aufweist.

12. Verfahren nach einem der Ansprüche 1 bis 11, **dadurch gekennzeichnet, daß** der Härter entweder füllstoffrei ist oder einen Füllstoff in einem Anteil von weniger als 10 Gew.-% aufweist.

13. Verfahren nach einem der Ansprüche 1 bis 12, **dadurch gekennzeichnet, daß** der Härter einen Füllstoff in einem Anteil von weniger als 10 Gew.-% aufweist.

14. Härterzusainmensetzung zur Verwendung in dem Verfahren nach einem der Ansprüche 1 bis 13, **dadurch gekennzeichnet, daß** sie eine flüchtige Säure aufweist und entweder füllstoffrei ist oder einen Füllstoff in einem Anteil von weniger als 20 Gew.-% aufweist.

15. Härterzusammensetzung nach Anspruch 14, **dadurch gekennzeichnet, daß** sie flüchtige Säure in einem Anteil von 10 bis 30 Gew.-% aufweist.

16. Härterzusainmensetzung nach einem der Ansprüche 14 bis 15, **dadurch gekennzeichnet, daß** die flüchtige Säure Ameisensäure, Essigsäure oder Pyroweinsäure ist.

17. Härterzusammensetzung nach einem der Ansprüche 14 bis 16, **dadurch gekennzeichnet, daß** sie einen Füllstoff in einem Anteil von weniger als 20 Gew.-% aufweist.

18. Härterzusammensetzung nach einem der Ansprüche 14 bis 16, **dadurch gekennzeichnet, daß** sie entweder füllstoffrei ist oder einen Füllstoff in einem Anteil von weniger als 10 Gew.-% aufweist.

19. Härterzusammensetzung nach einem der Ansprüche 14 bis 18, **dadurch gekennzeichnet, daß** sie einen Füllstoff in einem Anteil von weniger als 10 Gew.-% aufweist.

20. Härterzusammensetzung nach einem der Ansprüche 14 bis 19, **dadurch gekennzeichnet, daß** sie ein Verdickungsmittel aufweist.

## Revendications

1. Procédé d'application séparée, sur un substrat, des composants résine et durcisseur d'une colle à base de résine aminoplaste, **caractérisé en ce que** le durcisseur comporte un acide volatil et soit ne contient pas de charge, soit contient une charge en une proportion inférieure à 20 % en poids, les composants de la colle étant appliqués en boudins ou par pulvérisation, ou par n'importe quelle combinaison de ces modes d'application, l'ordre d'application étant au choix.

2. Procédé conforme à la revendication 1, **caractérisé en ce qu'**on applique le composant résine en boudins, après quoi l'on applique le composant durcisseur par pulvérisation.

3. Procédé conforme à la revendication 1, **caractérisé en ce qu'**on applique séparément sur le substrat les composants de la colle, en boudins, dans n'importe quel ordre au choix.

4. Procédé conforme à la revendication 3, **caractérisé en ce que** les boudins du composant appliqué en dernier viennent pratiquement recouvrir les boudins correspondants de l'autre composant appliqué auparavant.

5. Procédé conforme à la revendication 4, **caractérisé en ce qu'**on applique le composant durcisseur en boudins par-dessus le composant résine appliqué en boudins.

6. Procédé conforme à la revendication 3, **caractérisé en ce que** les boudins du composant appliqué en dernier ne recouvrent pas les boudins correspondants de l'autre composant appliqué auparavant.

7. Procédé conforme à la revendication 3, **caractérisé en ce que** les boudins du composant appliqué en dernier ne touchent pas les boudins correspondants de l'autre composant appliqué auparavant.

8. Procédé conforme à l'une des revendications 1 à 7, **caractérisé en ce que** le durcisseur contient de 10 à 30 % en poids d'un acide volatil.

9. Procédé conforme à l'une des revendications 1 à 8, **caractérisé en ce que** le rapport pondéral du durcisseur à la résine vaut de 1/3,5 à 1/2.

10. Procédé conforme à l'une des revendications 1 à 9, **caractérisé en ce que** le composant résine est choisi dans l'ensemble constitué par les résines mélamine-urée-formaldéhyde, urée-formaldéhyde et mélamine-formaldéhyde.

11. Procédé conforme à l'une des revendications 1 à 10, **caractérisé en ce que** le durcisseur contient une charge en une proportion inférieure à 20 % en poids.

12. Procédé conforme à l'une des revendications 1 à 11, **caractérisé en ce que** le durcisseur ne contient pas de charge, ou contient une charge en une proportion inférieure à 10 % en poids.

13. Procédé conforme à l'une des revendications 1 à 12, **caractérisé en ce que** le durcisseur contient une charge en une proportion inférieure à 10 % en poids.

14. Composition de durcisseur utilisable dans un procédé conforme à l'une des revendications 1 à 13, **caractérisée en ce qu'**elle contient un acide volatil et soit ne contient pas de charge, soit contient une charge en une proportion inférieure à 20 % en poids.

15. Composition de durcisseur conforme à la revendication 14, **caractérisée en ce qu'**elle contient de 10 à 30 % en poids d'un acide volatil.

16. Composition de durcisseur conforme à l'une des revendications 14 à 15, **caractérisée en ce que** l'acide volatil est de l'acide formique, de l'acide acétique ou de l'acide pyruvique.

17. Composition de durcisseur conforme à l'une des revendications 14 à 16, **caractérisée en ce qu'**elle contient une charge en une proportion inférieure à 20 % en poids.

18. Composition de durcisseur conforme à l'une des revendications 14 à 16, **caractérisée en ce qu'**elle ne contient pas de charge ou contient une charge en une proportion inférieure à 10 % en poids.

19. Composition de durcisseur conforme à l'une des revendications 14 à 18, **caractérisée en ce qu'**elle contient une charge en une proportion inférieure à 10 % en poids.

20. Composition de durcisseur conforme à l'une des revendications 14 à 19, **caractérisée en ce qu'**elle contient un épaississant.
